# EUROPEAN PATENT APPLICATION

(11) **EP 3 799 393 A1**
(43) Date of publication of application: **31.03.2021**
(21) Application number: 19910053.8
(22) Date of filing: 17.12.2019
(51) Int. Cl.: H04L 29/08

(54) **METHOD, DEVICE AND SYSTEM FOR MAP DATA UPDATING AND STORAGE MEDIUM**

(30) Priority: 16.01.2019 CN 201910040896
(71) Applicant: BEIJING BAIDU NETCOM SCIENCE TECHNOLOGY CO., LTD., No.10 Shangdi 10th Street Haidian District Beijing 100085 (CN)
(72) Inventor: LIANG, Jiaqi, Beijing 100085 (CN); YU, Gao, Beijing 100085 (CN); LI, Gaifan, Beijing 100085 (CN)
(74) Representative: Lam, Alvin
(86) International application number: PCT/CN2019/126019
(87) International publication number: WO 2020/147487

(57) **Abstract**

The present application provides a map data updating method, an apparatus, a system and a storage medium. The method includes: determining a road section identifier of a road section to be updated in a map; sending data collection instruction information to an unmanned vehicle, where the data collection instruction information includes: the road section identifier, and a current number of collection times of the road section corresponding to the road section identifier; receiving road section information which is sent by the unmanned vehicle and which corresponds to the road section identifier; acquiring a road section updated map according to the road section information; sending the road section updated map to the unmanned vehicle. Processing amount of map data can be reduced and efficiency of making a map can be improved, and the map of the unmanned vehicle can be updated in time to ensure normal driving of the unmanned vehicle.

## Description

This application claims priority to Chinese patent application No. 2019100408969, filed with the Chinese National Intellectual Property Administration on January 16, 2019 and entitled "MAP DATA UPDATING METHOD, APPARATUS, SYSTEM AND STORAGE MEDIUM", which is hereby incorporated by reference in its entirety.

### TECHNICAL FILED

The present application relates to the field of automobile technology, and in particular to a map data updating method, an apparatus, a system and a storage medium.

### BACKGROUND

With the development of automobile technology, unmanned vehicles have begun to be used. When an unmanned vehicle is travelling, automatic driving control needs to be performed based on pre-stored map data. Therefore, in order to ensure normal travelling of the unmanned vehicle, it is necessary to update map data in the unmanned vehicle in time.

In the prior art, when map data is updated, all the information for making a map needs to be acquired first; then, a new map is generated according to all the acquired information, or the map is updated according to all the acquired information.

However, such updating method requires a large amount of information to be processed, and workload of making a map is also very large when using all the information to generate a new map, which will thus affect map updating efficiency and which is not conducive to automatic driving of an unmanned vehicle.

### SUMMARY

The present application provides a map data updating method, an apparatus, a system and a storage medium, which can reduce processing amount of map data and improve efficiency of making a map, and can update a map of an unmanned vehicle in time to ensure normal driving of the unmanned vehicle.

In a first aspect, an embodiment of the present application provides a map data updating method, including:
determining a road section identifier of a road section to be updated in a map;
sending data collection instruction information to an unmanned vehicle, where the data collection instruction information includes: the road section identifier, and a current number of collection times of the road section corresponding to the road section identifier;
receiving road section information which is sent by the unmanned vehicle and which corresponds to the road section identifier;
acquiring a road section updated map according to the road section information;
sending the road section updated map to the unmanned vehicle.

In this embodiment, road section information to be updated can be accurately acquired, which reduces processing amount of map data and improves efficiency of making a map, and updates the map of the unmanned vehicle in time to ensure normal driving of the unmanned vehicle.

In a possible design, the determining the road section identifier of the road section to be updated in the map includes:
receiving a map update request sent by the unmanned vehicle or a user terminal, where the map update request includes current location information of the unmanned vehicle or the user terminal;
determining, according to the current location information, a road section identifier of a road section where the unmanned vehicle or the user terminal is located in the map.

In this embodiment, a cloud server receives the map update request sent by the unmanned vehicle or the user terminal. The map update request includes the current location information of the unmanned vehicle or the user terminal, and thus the cloud server can determine the road section identifier of the road section where the unmanned vehicle or the user terminal is located in the map according to the current location information, which improves efficiency of road section matching.

In a possible design, before receiving the road section information which is sent by the unmanned vehicle and which corresponds to the road section identifier, the method further includes:
judging whether the current number of collection times of the road section corresponding to the road section identifier is greater than a preset threshold; in the case of that the current number of collection times is greater than the preset threshold, sending collection success information to the unmanned vehicle; where the collection success information is used to instruct the unmanned vehicle to stop collection work for the road section corresponding to the road section identifier.

In this embodiment, the number of collection times of the same road section can be limited by setting a preset threshold, so that the amount of data processed by the cloud server can be reduced and redundant collection work can be avoided while ensuring integrity of the collected data.

In a second aspect, an embodiment of the present application provides a map data updating method, including:
receiving data collection instruction information sent by a cloud server; where the data collection instruction information includes: a road section identifier, and a current number of collection times of a road section corresponding to the road section identifier;
collecting road section information according to the data collection instruction information;
sending the road section information to the cloud server, so that the cloud server acquires a road section updated map according to the road section information;
receiving the road section updated map sent by the cloud server.

In this embodiment, road section information to be updated can be accurately acquired, which reduces processing amount of data when a map is updated and improves efficiency of making the map, and updates the map of the unmanned vehicle in time to ensure normal driving of the unmanned vehicle.

In a possible design, the collecting the road section information according to the data collection instruction information includes:
if a current location of the unmanned vehicle matches the road section corresponding to the road section identifier, judging whether the current number of collection times is greater than a preset threshold, and if the current number of collection times is not greater than the preset threshold, collecting road section information corresponding to the road section identifier; where the road section information includes: location information, environmental information and image information of the road section.

In this embodiment, the number of collection times of the same road section can be limited by setting a preset threshold, so that the amount of data processed by the cloud server can be reduced and redundant collection work can be avoided while ensuring integrity of the collected data.

In a possible design, after collecting the road section information according to the data collection instruction information, the method further includes:
performing a mapping preprocessing based on the road section information to acquire road section information in a preset format.

In this embodiment, after the road section information is acquired, the road information can be preprocessed to acquire the road information in the preset format. The road section information in the preset format can be directly used by map-making software, thereby providing map-making efficiency.

In a third aspect, an embodiment of the present application provides a map data updating apparatus, including:
a determining module, configured to determine a road section identifier of a road section to be updated in a map;
a sending module, configured to send data collection instruction information to an unmanned vehicle, where the data collection instruction information includes: the road section identifier, and a current number of collection times of the road section corresponding to the road section identifier;
a receiving module, configured to receive road section information which is sent by the unmanned vehicle and which corresponds to the road section identifier;
an updating module, configured to acquire a road section updated map according to the road section information;
where the sending module is further configured to send the road section updated map to the unmanned vehicle.

In a possible design, the determining module is specifically configured to:
receive a map update request sent by the unmanned vehicle or a user terminal, where the map update request includes current location information of the unmanned vehicle or the user terminal;
determine, according to the current location information, a road section identifier of a road section where the unmanned vehicle or the user terminal is located in the map.

In a possible design, the apparatus further includes:
a judging module, configured to judge whether the current number of collection times of the road section corresponding to the road section identifier is greater than a preset threshold before receiving the road section information which is sent by the unmanned vehicle and which corresponds to the road section identifier; if the current number of collection times is greater than the preset threshold, send collection success information to the unmanned vehicle; where the collection success information is used to instruct the unmanned vehicle to stop collection work for the road section corresponding to the road section identifier.

In a fourth aspect, an embodiment of the present application provides a map data updating apparatus, including:
a receiving module, configured to receive data collection instruction information sent by a cloud server; where the data collection instruction information includes: a road section identifier, and a current number of collection times of a road section corresponding to the road section identifier;
a collecting module, configured to collect road section information according to the data collection instruction information;
a sending module, configured to send the road section information to the cloud server, so that the cloud server acquires a road section updated map according to the road section information;
where the receiving module is further configured to receive the road section updated map sent by the cloud server.

In a possible design, the collecting module is specifically configured to:
if a current location of the unmanned vehicle matches the road section corresponding to the road section identifier, judge whether the current number of collection times is greater than a preset threshold, and if the current number of collection times is not greater than the preset threshold, collect road section information corresponding to the road section identifier; where the road section information includes: location information, environment information and image information of the road section.

In a possible design, the apparatus further includes:
a preprocessing module, configured to perform a mapping preprocessing based on the road section information to acquire road section information in a preset format.

In a fifth aspect, an embodiment of the present application provides a map data updating system, including: a memory and a processor, the memory storing executable instructions of the processor; where the processor is configured to execute the map data updating method according to any design of the first aspect and the second aspect by executing the executable instructions.

In a sixth aspect, an embodiment of the present application provides a computer-readable storage medium having a computer program stored thereon, where the map data updating method according to any design of the first aspect and the second aspect is executed when the program is executed by a processor.

In a seventh aspect, an embodiment of the present application provides a program product, where the program product includes: a computer program, where the computer program is stored in a readable storage medium; at least one processor of a server is capable of reading the computer program from the readable storage medium; the at least one processor executes the computer program to cause the server to execute the map data updating method according to any design of the first aspect and the second aspect.

The present application provides a map data updating method, an apparatus, a system and a storage medium. A road section identifier of a road section to be updated in a map is determined; data collection instruction information is sent to an unmanned vehicle, where the data collection instruction information includes: the road section identifier, and a current number of collection times of the road section corresponding to the road section identifier; road section information which is sent by the unmanned vehicle and which corresponds to the road section identifier is received; a road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

### BRIEF DESCRIPTION OF THE DRAWINGS

FIG. 1 is a schematic diagram of a principle of an application scenario of the present application;
FIG. 2 is a flowchart of a map data updating method provided by Embodiment 1 of the present application;
FIG. 3 is a flowchart of a map data updating method provided by Embodiment 2 of the present application;
FIG. 4 is a flowchart of a map data updating method provided by Embodiment 3 of the present application;
FIG. 5 is a flowchart of a map data updating method provided by Embodiment 4 of the present application;
FIG. 6 is a flowchart of a map data updating method provided by Embodiment 5 of the present application;
FIG. 7 is a schematic structural diagram of a map data updating apparatus provided by Embodiment 6 of the present application;
FIG. 8 is a schematic structural diagram of a map data updating apparatus provided by Embodiment 7 of the present application;
FIG. 9 is a schematic structural diagram of a map data updating apparatus provided by Embodiment 8 of the present application;
FIG. 10 is a schematic structural diagram of a map data updating apparatus provided by Embodiment 9 of the present application; and
FIG. 11 is a schematic structural diagram of a map data updating system provided by Embodiment 10 of the present application.

### DESCRIPTION OF EMBODIMENTS

In order to make the purpose, technical solutions and advantages of embodiments of the present application clearer, the following will clearly and comprehensively describe the technical solutions in the embodiments of the present application with reference to the drawings in the embodiments of the present application. Obviously, the described embodiments are part of the embodiments of the present application, rather than all of the embodiments. Based on the embodiments in the present application, all other embodiments obtained by those of ordinary skill in the art without creative effort, shall fall within the protection scope of the present application.

The terms "first", "second", "third", "fourth" and so on (if any) in the specification, claims and the above-mentioned drawings of the present application are used to distinguish similar objects, and do not have to be used to describe a specific order or sequence. It should be understood that the data used in this way can be interchanged under appropriate circumstances, so that the embodiments of the present application described herein can be implemented, for example, in a sequence other than those illustrated or described herein. In addition, the terms "including" and "having" and any variations of them are intended to cover non-exclusive inclusions. For example, processes, methods, systems, products, or devices that include a series of steps or units are not necessarily limited to those clearly listed steps or units, but may include other steps or units that are not clearly listed or are inherent to these processes, methods, products, or devices.

The technical solutions of the present application will be described in detail below with specific embodiments. The following specific embodiments can be combined with each other, and the same or similar concepts or processes may not be repeated in some embodiments.

An unmanned vehicle is also called a self-driving car. The unmanned vehicle is a product of a combination of the latest scientific and technological achievements (such as electronic computers) and the modern automobile industry, and usually has functions of automatic driving, automatic transmission, and automatic road recognition. There are a large number of data collecting apparatuses on the unmanned vehicle, such as a video image collecting apparatus, a radar ranging apparatus, a positioning apparatus, a somatosensory apparatus, etc. When the unmanned vehicle is travelling, automatic driving control needs to be performed according to pre-stored map data. Therefore, in order to ensure normal travelling of the unmanned vehicle, it is necessary to update map data in the unmanned vehicle in time.

In the prior art, when map data is updated, all the information for making a map needs to be acquired first; then, a new map is generated according to all the acquired information, or the map is updated according to all the acquired information. However, such updating method requires a large amount of information to be processed, and workload of making a map is also very large when using all the information to generate a new map, which will thus affect map updating efficiency and which is not conducive to automatic driving of an unmanned vehicle.

In view of the above technical problems, the present application provides a method, in which a road section identifier of a road section to be updated in a map can be determined; then data collection instruction information is sent to an unmanned vehicle, and road section information is collected through a sensor on the unmanned vehicle, to finally complete map updating of the corresponding road section. In this way, processing amount of map data can be reduced and efficiency of making a map can be improved; and the map of the unmanned vehicle can be updated in time to ensure normal driving of the unmanned vehicle.

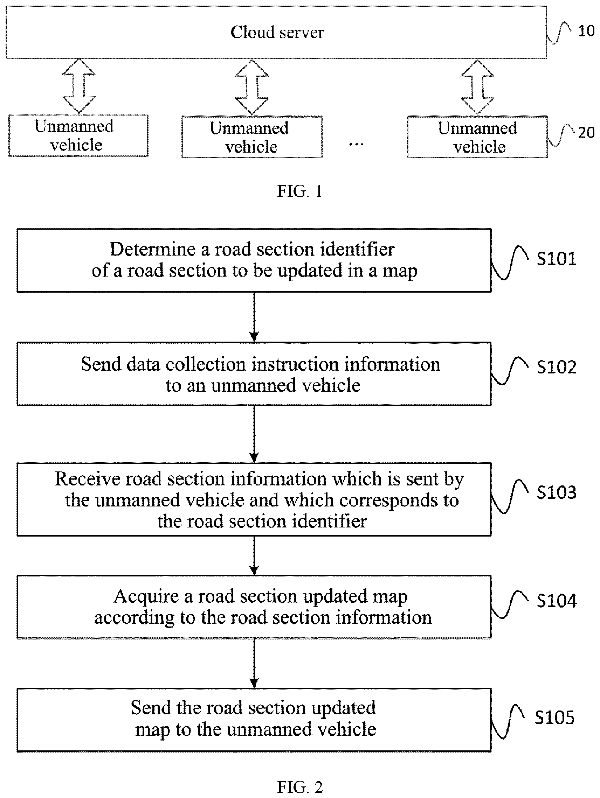

FIG. 1 is a schematic diagram of a principle of an application scenario of the present application. As shown in FIG. 1, an unmanned vehicle 20 may be a user of a map or an original collector of map information. A cloud server 10 can send data collection information to the unmanned vehicle, and the unmanned vehicle 20 uses various sensors on the vehicle to collect data, so as to perfect the map information.

Specifically, the cloud server 10 can send data collection instruction information to multiple unmanned vehicles 20, and the multiple unmanned vehicles 20 simultaneously receive a data collection task. Therefore, after the cloud server 10 receives road section information that meets demand, the cloud server 10 can send collection success information to the unmanned vehicles 20. After receiving the collection success information, the unmanned vehicles 20 then stop collection work for a road section corresponding to a road section identifier.

The cloud server 10 performs analyzing and processing according to the road section information which is collected by the unmanned vehicle 20 and used as a map element for map updating, to acquire a road section updated map. A method for performing analyzing and processing according to the road section information to acquire the road section updated map may be an existing map updating method, which is a prior art and will not be repeated here.

The cloud server 10 sends the updated map to the unmanned vehicle 20, and the unmanned vehicle 20 receives the road section updated map sent by the cloud server 10, to update and upgrade a local map of the unmanned vehicle 20.

It should be particularly pointed out that, in addition to sending the road section updated map to the unmanned vehicles which collect data, the cloud server 10 can also send the road section updated map to other vehicle terminals. For example, an unmanned vehicle A performs road section collection work and sends the collected road section information to the cloud server, so that the cloud server acquires the road section updated map according to the road section information; then the cloud server sends the road section updated map to a vehicle B. The vehicle B may be an unmanned vehicle which does not participate in data collection, or a vehicle with a part of automatic driving functions.

It should be noted that the cloud server 10 can send data collection instruction information to multiple unmanned vehicles 20 at the same time, and can also receive road section information sent by multiple unmanned vehicles 20. At the same time, the present application does not limit a communication method between the cloud server 10 and the unmanned vehicle 20, and the cloud server 10 and the unmanned vehicle 20 may communicate in an OTA manner or other manners. Over the air (Over the Air OTA) is a technology of remotely managing card data and applications through an air interface of mobile communication. The air interface can use wireless application protocol (Wireless Application Protocol WAP), general packet radio service (General Packet Radio Service, GPRS) technology, and short message technology. Application of the OTA technology enables mobile communication not only to provide voice and data services, but also to provide new service download.

Application of the above method can reduce processing amount of map data and improve efficiency of making a map, and can update the map of the unmanned vehicle in time to ensure normal driving of the unmanned vehicle.

The technical solutions of the present application and how the technical solutions of the present application solve the above-mentioned technical problems will be described in detail below with specific embodiments. The following specific embodiments can be combined with each other, and the same or similar concepts or processes may not be repeated in some embodiments. The embodiments of the present application will be described below in conjunction with the drawings.

FIG. 2 is a flowchart of a map data updating method provided by Embodiment 1 of the present application. As shown in FIG. 2, the method in this embodiment can include:
S101: determine a road section identifier of a road section to be updated in a map.

In this embodiment, a cloud server receives a map update request sent by an unmanned vehicle or a user terminal, where the map update request includes current location information of the unmanned vehicle or the user terminal; determines, according to the current location information, a road section identifier of a road section where the unmanned vehicle or the user terminal is located in the map.

Specifically, in the prior art, when updating map data, it is first necessary to acquire all the information for making the map, which will affect map updating efficiency and is not conducive to automatic driving of the unmanned vehicle. In this embodiment, the road section, which needs to be updated, in the map can be identified, so as to realize map updating in a road section level. For example, a user sends a directive instruction to the cloud server, and the directive instruction includes the road section identifier of the road section to be updated. The cloud server extracts the current location information of the unmanned vehicle or the user terminal from the map update request, determines that the road section where the unmanned vehicle or the user terminal is located needs map update, and marks the road section identifier. At the same time, the cloud server can also monitor information of each road section in real time to judge whether the road section matches the map. If road section information does not match the map, the road section to be updated is determined.

S102: send data collection instruction information to an unmanned vehicle.

In this embodiment, there are a large number of data collecting apparatuses on the unmanned vehicle, such as a video image collecting apparatus, a radar ranging apparatus, a positioning apparatus, a somatosensory apparatus, and so on. The unmanned vehicle may be a user of a map or an original collector of map information. The cloud server can send data collection information to the unmanned vehicle, and the unmanned vehicle uses various sensors on the vehicle to collect data, so as to perfect the map information. At this time, the unmanned vehicle acts as a mobile data collecting vehicle, so that road section information can be collected conveniently and efficiently. In this embodiment, the data collection instruction information includes: a road section identifier, and a current number of collection times of a road section corresponding to the road section identifier. Since the cloud server can send the data collection instruction information to multiple unmanned vehicles, the current number of collection times of the road section is used to control whether the unmanned vehicle needs to continue collecting the road section information.

S103: receive road section information which is sent by the unmanned vehicle and which corresponds to the road section identifier.

In this embodiment, the cloud server receives the road section information sent by the unmanned vehicle, and performs processing, aggregating and others on the road section information sent by multiple unmanned vehicles.

S104: acquire a road section updated map according to the road section information.

In this embodiment, the cloud server performs analyzing and processing according to the road section information which is collected by the unmanned vehicle and used as a map element for map updating, to acquire a road section updated map. A method for performing analyzing and processing according to the road section information to acquire the road section updated map may be an existing map updating method, which is a prior art and will not be repeated here.

S105: send the road section updated map to the unmanned vehicle.

In this embodiment, the cloud server sends the updated map to the unmanned vehicle, so as to realize map updating on the unmanned vehicle. It should be noted that the unmanned vehicle that receives the updated map here may be all unmanned vehicles, and a range thereof may be wider than the unmanned vehicles that receive the data collection instruction information. Specifically, in addition to sending the road section updated map to the unmanned vehicles which collect data, the cloud server can also send the road section updated map to other vehicle terminals (for example, an unmanned vehicle which does not participate in data collection, or a vehicle with a part of automatic driving functions).

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

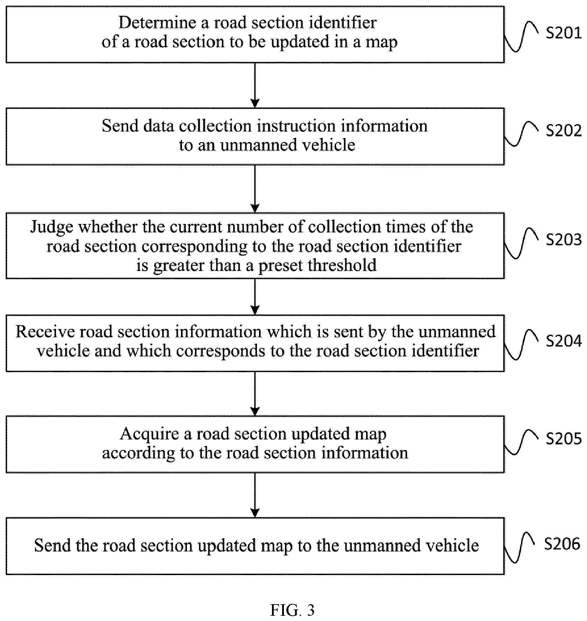

FIG. 3 is a flowchart of a map data updating method provided by Embodiment 2 of the present application. As shown in FIG. 3, the method in this embodiment can include:
S201: determine a road section identifier of a road section to be updated in a map.
S202: send data collection instruction information to an unmanned vehicle.

In this embodiment, for specific implementation processes and technical principles of step S201 to step S202, please refer to relevant description in step S101 to step S102 in the method shown in FIG. 2, which will not be repeated here.

S203: judge whether the current number of collection times of the road section corresponding to the road section identifier is greater than a preset threshold.

In this embodiment, the cloud server judges whether the current number of collection times of the road section corresponding to the road section identifier is greater than a preset threshold; if the current number of collection times is greater than the preset threshold, sends collection success information to the unmanned vehicle; where the collection success information is used to instruct the unmanned vehicle to stop collection work for the road section corresponding to the road section identifier.

Specifically, the cloud server can send data collection information to the unmanned vehicle, and the unmanned vehicle uses various sensors on the vehicle to collect data, so as to perfect the map information. Since the cloud server can send the data collection instruction information to multiple unmanned vehicles, the multiple unmanned vehicles simultaneously receive a data collection task. Therefore, after the cloud server receives the road section information that meets demand, the cloud server can send the collection success information to the unmanned vehicles. After receiving the collection success information, the unmanned vehicles then stop the collection work for the road section corresponding to the road section identifier.

S204: receive road section information which is sent by the unmanned vehicle and which corresponds to the road section identifier.

S205: acquire a road section updated map according to the road section information.

S206: send the road section updated map to the unmanned vehicle.

In this embodiment, for specific implementation processes and technical principles of step S204 to step S206, please refer to relevant description in step S103 to step S105 in the method shown in FIG. 2, which will not be repeated here.

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

In addition, in this embodiment, it can also be judged whether the current number of collection times of the road section corresponding to the road section identifier is greater than the preset threshold; if the current number of collection times is greater than the preset threshold, the collection success information is sent to the unmanned vehicle, so that the unmanned vehicle stops road section information collection, thereby improving efficiency of road section information collection and improving the efficiency of making a map.

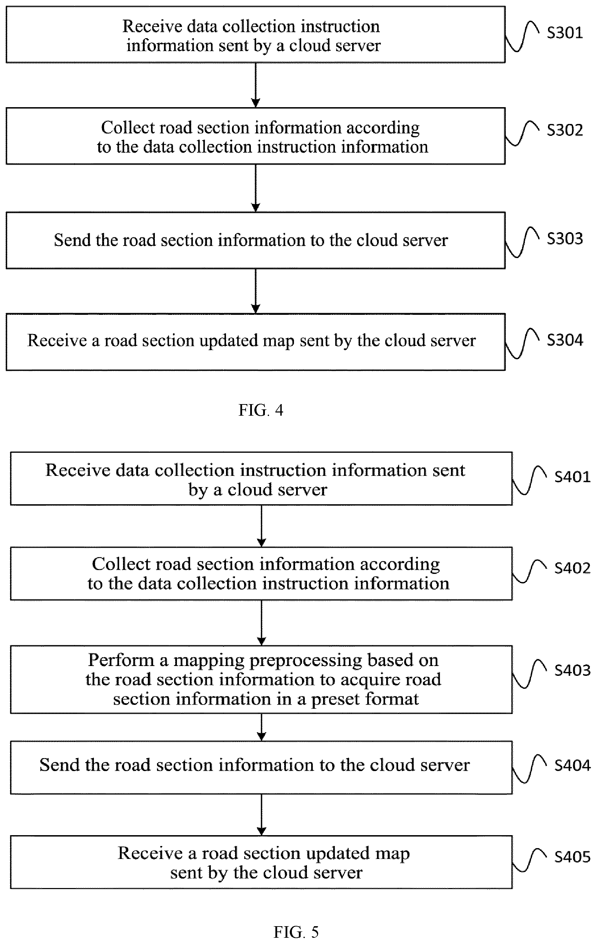

FIG. 4 is a flowchart of a map data updating method provided by Embodiment 3 of the present application. As shown in FIG. 4, the method in this embodiment can include:
S301: receive data collection instruction information sent by a cloud server.

In this embodiment, there are a large number of data collecting apparatuses on an unmanned vehicle, such as a video image collecting apparatus, a radar ranging apparatus, a positioning apparatus, a somatosensory apparatus, and so on. The unmanned vehicle may be a user of a map or an original collector of map information. The data collection instruction information that the unmanned vehicle receives from the cloud server includes: a road section identifier, and a current number of collection times of a road section corresponding to the road section identifier.

S302: collect road section information according to the data collection instruction information.

In this embodiment, if a current location of the unmanned vehicle matches the road section corresponding to the road section identifier, it is judged whether the current number of collection times is greater than a preset threshold, and if the current number of collection times is not greater than the preset threshold, the road section information corresponding to the road section identifier is collected; where the road section information includes: location information, environmental information and image information of the road section. For example, the unmanned vehicle collects the road section information through radar, an image collecting apparatus (a monocular camera, a binocular camera), a GPS device, etc.

S303: send the road section information to the cloud server.

In this embodiment, the unmanned vehicle sends the road section information to the cloud server, so that the cloud server acquires a road section updated map according to the road section information.

S304: receive a road section updated map sent by the cloud server.

In this embodiment, the cloud server performs analyzing and processing according to the road section information which is collected by the unmanned vehicle and used as a map element for map updating, to acquire a road section updated map. A method for performing analyzing and processing according to the road section information to acquire the road section updated map may be an existing map updating method, which is a prior art and will not be repeated here. The cloud server sends the road section updated map to the unmanned vehicle, and the unmanned vehicle receives the road section updated map sent by the cloud server, to update and upgrade a local map of the unmanned vehicle.

It should be pointed out that in addition to sending the road section updated map to unmanned vehicles which collect data, the cloud server can also send the road section updated map to other vehicle terminals (for example, an unmanned vehicle which does not participate in data collection, or a vehicle with a part of automatic driving functions).

In this embodiment, the data collection instruction information sent by the cloud server is received; where the data collection instruction information includes: the road section identifier, and the current number of collection times of the road section corresponding to the road section identifier; the road section information is collected according to the data collection instruction information; the road section information is sent to the cloud server, so that the cloud server acquires the road section updated map according to the road section information; and the road section updated map sent by the cloud server is received, which can reduce processing amount of map data and improve efficiency of making a map, and can update the map of the unmanned vehicle in time to ensure normal driving of the unmanned vehicle.

FIG. 5 is a flowchart of a map data updating method provided by Embodiment 4 of the present application. As shown in FIG. 5, the method in this embodiment can include:
S401: receive data collection instruction information sent by a cloud server.
S402: collect road section information according to the data collection instruction information.

In this embodiment, for specific implementation processes and technical principles of step S401 to step S402, please refer to relevant description in step S301 to step S302 in the method shown in FIG. 2, which will not be repeated here.

S403: perform a mapping preprocessing based on the road section information to acquire road section information in a preset format.

In this embodiment, the unmanned vehicle can also preprocess the road section information to acquire road section information data in a preset format. At the same time, amount of data transmission can also be reduced through the preprocessing and data transmission efficiency can be improved.

S404: send the road section information to the cloud server.

S405: receive a road section updated map sent by the cloud server.

In this embodiment, for specific implementation processes and technical principles of step S404 to step S205, please refer to relevant description in step S303 to step S304 in the method shown in FIG. 2, which will not be repeated here.

In this embodiment, the data collection instruction information sent by the cloud server is received; where the data collection instruction information includes: the road section identifier, and the current number of collection times of the road section corresponding to the road section identifier; the road section information is collected according to the data collection instruction information; the road section information is sent to the cloud server, so that the cloud server acquires the road section updated map according to the road section information; and the road section updated map sent by the cloud server is received, which can reduce processing amount of map data and improve efficiency of making a map, and can update the map of the unmanned vehicle in time to ensure normal driving of the unmanned vehicle. In addition, in this embodiment, mapping preprocessing can also be performed based on the road section information to acquire the road section information in the preset format. At the same time, amount of data transmission can also be reduced through the preprocessing and data transmission efficiency can be improved.

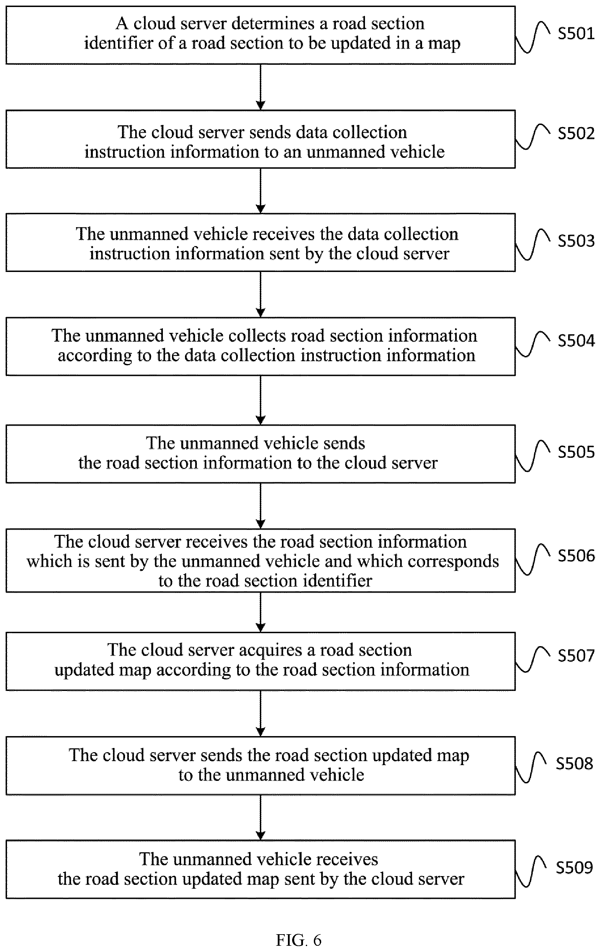

FIG. 6 is a flowchart of a map data updating method provided by Embodiment 5 of the present application. As shown in FIG. 6, the method in this embodiment can include:
S501: a cloud server determines a road section identifier of a road section to be updated in a map.
S502: the cloud server sends data collection instruction information to an unmanned vehicle.

In this embodiment, for specific implementation processes and technical principles of step S501 to step S502, please refer to relevant description in step S101 to step S102 in the method shown in FIG. 2, which will not be repeated here.

S503: the unmanned vehicle receives the data collection instruction information sent by the cloud server.

S504: the unmanned vehicle collects road section information according to the data collection instruction information.

S505: the unmanned vehicle sends the road section information to the cloud server.

In this embodiment, for specific implementation processes and technical principles of step S503 to step S505, please refer to relevant description in step S301 to step S303 in the method shown in FIG. 2, which will not be repeated here.

S506: the cloud server receives the road section information which is sent by the unmanned vehicle and which corresponds to the road section identifier.

S507: the cloud server acquires a road section updated map according to the road section information.

S508: the cloud server sends the road section updated map to the unmanned vehicle.

In this embodiment, for specific implementation processes and technical principles of step S506 to step S508, please refer to relevant description in step S103 to step S105 in the method shown in FIG. 2, which will not be repeated here.

S509: the unmanned vehicle receives the road section updated map sent by the cloud server.

In this embodiment, for a specific implementation process and technical principle of step S509, please refer to relevant description in step S304 in the method shown in FIG. 2, which will not be repeated here.

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

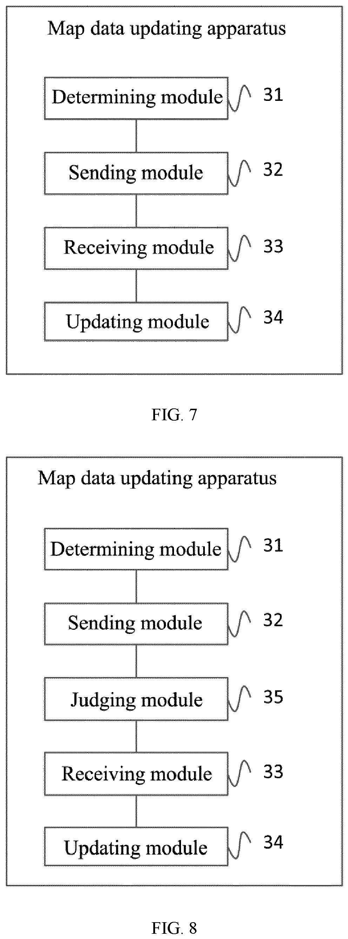

FIG. 7 is a schematic structural diagram of a map data updating apparatus provided by Embodiment 6 of the present application. As shown in FIG. 7, the map data updating apparatus of this embodiment can include:
a determining module 31, configured to determine a road section identifier of a road section to be updated in a map;
a sending module 32, configured to send data collection instruction information to an unmanned vehicle, where the data collection instruction information includes: the road section identifier, and a current number of collection times of the road section corresponding to the road section identifier;
a receiving module 33, configured to receive road section information which is sent by the unmanned vehicle and which corresponds to the road section identifier;
an updating module 34, configured to acquire a road section updated map according to the road section information;
where the sending module 32 is further configured to send the road section updated map to the unmanned vehicle.

In a possible design, the determining module 31 is specifically configured to:
receive a map update request sent by the unmanned vehicle or a user terminal, where the map update request includes current location information of the unmanned vehicle or the user terminal;
determine, according to the current location information, a road section identifier of a road section where the unmanned vehicle or the user terminal is located in the map.

The map data updating apparatus of this embodiment can execute the technical solution in the method shown in FIG. 2. For a specific implementation process and technical principle, please refer to relevant description in the method shown in FIG. 2, which will not be repeated here.

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

FIG. 8 is a schematic structural diagram of a map data updating apparatus provided by Embodiment 7 of the present application. As shown in FIG. 8, on the basis of the apparatus shown in FIG. 7, the map data updating apparatus of this embodiment can further include:
a judging module 35, configured to judge whether the current number of collection times of the road section corresponding to the road section identifier is greater than a preset threshold before receiving the road section information which is sent by the unmanned vehicle and which corresponds to the road section identifier; if the current number of collection times is greater than the preset threshold, send collection success information to the unmanned vehicle information; where the collection success information is used to instruct the unmanned vehicle to stop collection work for the road section corresponding to the road section identifier.

The map data updating apparatus of this embodiment can execute the technical solutions in the methods shown in FIG. 2 and FIG. 3. For specific implementation processes and technical principles, please refer to relevant description in the methods shown in FIG. 2 and FIG. 3, which will not be repeated here.

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

In addition, in this embodiment, it can also be judged whether the current number of collection times of the road section corresponding to the road section identifier is greater than the preset threshold; if the current number of collection times is greater than the preset threshold, the collection success information is sent to the unmanned vehicle, so that the unmanned vehicle stops road section information collection, thereby improving efficiency of road section information collection and improving the efficiency of making a map.

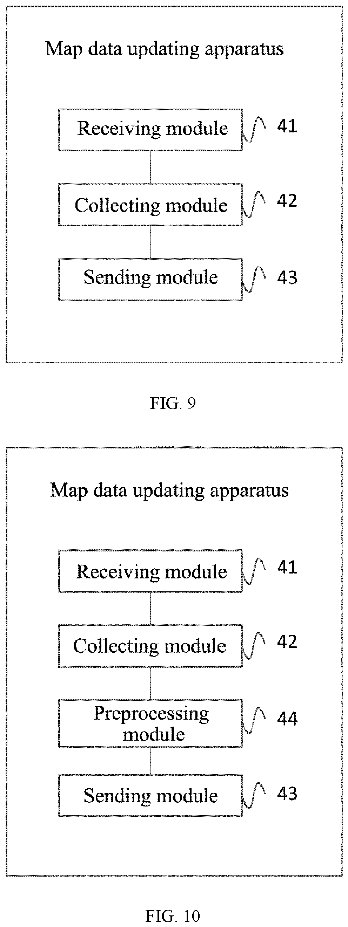

FIG. 9 is a schematic structural diagram of a map data updating apparatus provided by Embodiment 8 of the present application. As shown in FIG. 9, the map data updating apparatus of this embodiment can include:
a receiving module 41, configured to receive data collection instruction information sent by a cloud server; where the data collection instruction information includes: a road section identifier, and a current number of collection times of a road section corresponding to the road section identifier;
a collecting module 42, configured to collect road section information according to the data collection instruction information;
a sending module 43, configured to send the road section information to the cloud server, so that the cloud server acquires a road section updated map according to the road section information;
where the receiving module 41 is further configured to receive the road section updated map sent by the cloud server.

In a possible design, the collecting module 42 is specifically configured to:
if a current location of the unmanned vehicle matches the road section corresponding to the road section identification, judge whether the current number of collection times is greater than a preset threshold, and if the current number of collection times is not greater than the preset threshold, collect road section information corresponding to the road section identifier; where the road section information includes: location information, environmental information, image information of the road section.

The map data updating apparatus of this embodiment can execute the technical solution in the method shown in FIG. 4. For a specific implementation process and technical principle, please refer to relevant description in the method shown in FIG. 4, which will not be repeated here.

In this embodiment, the data collection instruction information sent by the cloud server is received; where the data collection instruction information includes: the road section identifier, and the current number of collection times of the road section corresponding to the road section identifier; the road section information is collected according to the data collection instruction information; the road section information is sent to the cloud server, so that the cloud server acquires the road section updated map according to the road section information; and the road section updated map sent by the cloud server is received, which can reduce processing amount of map data and improve efficiency of making a map, and can update the map of the unmanned vehicle in time to ensure normal driving of the unmanned vehicle.

FIG. 10 is a schematic structural diagram of a map data updating apparatus provided by Embodiment 9 of the present application. As shown in FIG. 10, on the basis of the apparatus shown in FIG. 9, the map data updating apparatus of this embodiment can further include:
a preprocessing module 44, configured to perform a mapping preprocessing based on the road section information to acquire road section information in a preset format.

The map data updating apparatus of this embodiment can execute the technical solutions in the methods shown in FIG. 4 and FIG. 5. For specific implementation processes and technical principles, please refer to relevant description in the methods shown in FIG. 4 and FIG. 5, which will not be repeated here.

In this embodiment, the data collection instruction information sent by the cloud server is received; where the data collection instruction information includes: the road section identifier, and the current number of collection times of the road section corresponding to the road section identifier; the road section information is collected according to the data collection instruction information; the road section information is sent to the cloud server, so that the cloud server acquires the road section updated map according to the road section information; and the road section updated map sent by the cloud server is received, which can reduce processing amount of map data and improve efficiency of making a map, and can update the map of the unmanned vehicle in time to ensure normal driving of the unmanned vehicle.

In addition, in this embodiment, mapping preprocessing can also be performed based on the road section information to acquire the road section information in the preset format. At the same time, amount of data transmission can also be reduced through the preprocessing and data transmission efficiency can be improved.

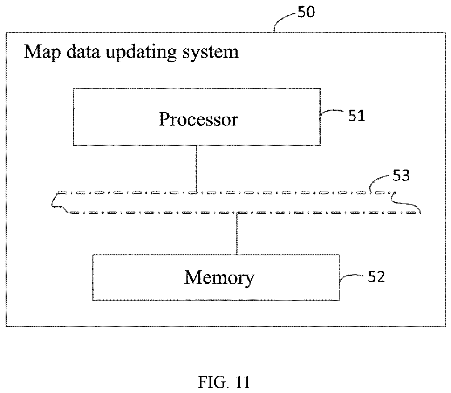

FIG. 11 is a schematic structural diagram of a map data updating system provided by Embodiment 10 of the present application. As shown in FIG. 11, the map data updating system 50 of this embodiment can include a processor 51 and a memory 52.

The memory 52 is configured to store programs; the memory 52 may include a volatile memory (English: volatile memory), such as a random-access memory (English: random-access memory, abbreviation: RAM), such as a static random-access memory (English: static random-access memory, abbreviation: SRAM), a double data rate synchronous dynamic random access memory (English: Double Data Rate Synchronous Dynamic Random Access Memory, abbreviation: DDR SDRAM), etc.; the memory may also include a non-volatile memory (English: non-volatile memory), such as a flash memory (English: flash memory). The memory 52 is configured to store computer programs (such as application programs and functional modules that implement the foregoing methods, etc.), computer instructions, etc., and the aforementioned computer programs, computer instructions and so on may be partitioned and stored in one or more memories 52. In addition, the aforementioned computer programs, computer instructions, data and so on can be called by the processor 51.

The aforementioned computer programs, computer instructions and so on may be partitioned and stored in one or more memories 52. In addition, the aforementioned computer programs, computer instructions, data and so on can be called by the processor 51.

The processor 51 is configured to execute a computer program stored in the memory 52 to implement the steps in the methods involved in the foregoing embodiments.

For details, please refer to relevant description in the foregoing method embodiments.

The processor 51 and the memory 52 may be independent structures, or may be integrated together as an integrated structure. When the processor 51 and the memory 52 are independent structures, the memory 52 and the processor 51 may be coupled and connected through a bus 53.

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

The server of this embodiment can execute the technical solutions in the methods shown in FIG. 2, FIG. 3, FIG. 4, and FIG. 5. For specific implementation processes and technical principles, please refer to relevant description in the methods shown in FIG. 2, FIG. 3, FIG. 4, and FIG. 5, which will not be repeated here.

In addition, an embodiment of the present application also provides a computer-readable storage medium. The computer-readable storage medium stores computer-executable instructions. When at least one processor of a user equipment executes the computer-executable instructions, the user equipment executes the various possible methods described above.

In this embodiment, the road section identifier of the road section to be updated in the map is determined; the data collection instruction information is sent to the unmanned vehicle, where the data collection instruction information includes: the road section identifier, and the current number of collection times of the road section corresponding to the road section identifier; the road section information which is sent by the unmanned vehicle and which corresponds to the road section identifier is received; the road section updated map is acquired according to the road section information; and the road section updated map is sent to the unmanned vehicle, which can reduce processing amount of map data and improve efficiency of making a map, and can update the map of the unmanned vehicle in time to ensure normal driving of the unmanned vehicle.

The computer-readable medium includes a computer storage medium and a communication medium, where the communication medium includes any medium that facilitates a transfer of a computer program from one place to another. The storage medium may be any available medium that can be accessed by a general-purpose or special-purpose computer. An exemplary storage medium is coupled to the processor, so that the processor can read information from the storage medium and can write information to the storage medium. Of course, the storage medium may also be a part of the processor. The processor and the storage medium may be located in an ASIC. In addition, the ASIC may be located in a user equipment. Of course, the processor and the storage medium may also exist as discrete components in a communication device.

The present application also provides a program product. The program product includes a computer program. The computer program is stored in a readable storage medium. At least one processor of a server can read the computer program from the readable storage medium. At least one processor executes the computer program to enable the server to implement the map data updating method of any of the above embodiments of the present application.

A person of ordinary skill in the art can understand that all or part of the steps in the foregoing method embodiments can be implemented by hardware related to program instructions. The aforementioned program can be stored in a computer-readable storage medium. When the program is executed, the steps including the foregoing method embodiments are executed; and the foregoing storage medium includes: a ROM, a RAM, a magnetic disk, an optical disk or other media that can store program codes.

Finally, it should be noted that the above embodiments are only used to illustrate the technical solutions of the present application, rather than limiting them; although the present application has been described in detail with reference to the foregoing embodiments, those of ordinary skill in the art should understand that, it is still possible to modify the technical solutions described in the foregoing embodiments, or equivalently replace some or all of the technical features therein; these modifications or replacements do not cause the essence of the corresponding technical solutions to deviate from the scope of the technical solutions of the embodiments of the present application.

## Claims

1. A map data updating method, comprising:
determining a road section identifier of a road section to be updated in a map;
sending data collection instruction information to an unmanned vehicle, wherein the data collection instruction information comprises: the road section identifier, and a current number of collection times of the road section corresponding to the road section identifier;
receiving road section information which is sent by the unmanned vehicle and which corresponds to the road section identifier;
acquiring a road section updated map according to the road section information;
sending the road section updated map to the unmanned vehicle.

2. The method according to claim 1, wherein the determining the road section identifier of the road section to be updated in the map comprises:
receiving a map update request sent by the unmanned vehicle or a user terminal, wherein the map update request comprises current location information of the unmanned vehicle or the user terminal;
determining, according to the current location information, a road section identifier of a road section where the unmanned vehicle or the user terminal is located in the map.

3. The method according to claim 1, wherein before receiving the road section information which is sent by the unmanned vehicle and which corresponds to the road section identifier, the method further comprises:
judging whether the current number of collection times of the road section corresponding to the road section identification is greater than a preset threshold; if the current number of collection times is greater than the preset threshold, sending collection success information to the unmanned vehicle; wherein the collection success information is used to instruct the unmanned vehicle to stop collection work for the road section corresponding to the road section identifier.

4. A map data updating method, comprising:
receiving data collection instruction information sent by a cloud server; wherein the data collection instruction information comprises: a road section identifier, and a current number of collection times of a road section corresponding to the road section identifier;
collecting road section information according to the data collection instruction information;
sending the road section information to the cloud server, so that the cloud server acquires a road section updated map according to the road section information;
receiving the road section updated map sent by the cloud server.

5. The method according to claim 4, wherein the collecting the road section information according to the data collection instruction information comprises:
if a current position of the unmanned vehicle matches the road section corresponding to the road section identifier, judging whether the current number of collection times is greater than a preset threshold, and if the current number of collection times is not greater than the preset threshold, collecting road section information corresponding to the road section identifier; wherein the road section information comprises: location information, environmental information and image information of the road section.

6. The method according to claim 4, wherein after collecting the road section information according to the data collection instruction information, the method further comprises:
performing a mapping preprocessing based on the road section information to acquire road section information in a preset format.

7. A map data updating apparatus, comprising:
a determining module, configured to determine a road section identifier of a road section to be updated in a map;
a sending module, configured to send data collection instruction information to an unmanned vehicle, wherein the data collection instruction information comprises: the road section identifier, and a current number of collection times of the road section corresponding to the road section identifier;
a receiving module, configured to receive road section information which is sent by the unmanned vehicle and which corresponds to the road section identifier;
an updating module, configured to acquire a road section updated map according to the road section information;
wherein the sending module is further configured to send the road section updated map to the unmanned vehicle.

8. A map data updating apparatus, comprising:
a receiving module, configured to receive data collection instruction information sent by a cloud server; wherein the data collection instruction information comprises: a road section identifier, and a current number of collection times of a road section corresponding to the road section identifier;
a collecting module, configured to collect road section information according to the data collection instruction information;
a sending module, configured to send the road section information to the cloud server, so that the cloud server acquires a road section updated map according to the road section information;
wherein the receiving module is further configured to receive the road section updated map sent by the cloud server.

9. A map data updating system, comprising: a memory and a processor, the memory storing executable instructions of the processor; wherein the processor is configured to execute the map data updating method according to claims 1 to 6 by executing the executable instructions.

10. A computer-readable storage medium having a computer program stored thereon, wherein the map data updating method according to any one of claims 1 to 6 is implemented when the program is executed by a processor.
